# EUROPEAN PATENT SPECIFICATION

(11) **EP 4 171 054 B1**
(45) Date of publication and mention of the grant of the patent: **25.06.2025**
(21) Application number: 21868178.1
(22) Date of filing: 21.06.2021
(51) Int. Cl.: H04Q 1/02, B61B 12/00

(54) **DAMPING DEVICE AND CPE ASSEMBLY**
DÄMPFUNGSVORRICHTUNG UND CPE-ANORDNUNG
DISPOSITIF D'AMORTISSEMENT ET ENSEMBLE CPE

(30) Priority: 21.09.2020 CN 202010994334
(43) Date of publication of application: 26.04.2023
(73) Proprietor: ZTE Corporation, Shenzhen, Guangdong 518057 (CN)
(72) Inventor: ZHANG, Lei, Shenzhen, Guangdong 518057 (CN)
(74) Representative: Swindell & Pearson Limited
(86) International application number: PCT/CN2021/101252
(87) International publication number: WO 2022/057349

(56) References cited:
- CN-A- 108 969 927
- CN-A- 110 038 234
- CN-U- 205 367 514
- CN-U- 208 544 927
- CN-U- 208 906 965

## Description

### TECHNICAL FIELD

The present disclosure relates to the field of electronic equipment, and in particular to a damping device and a Customer Premise Equipment (CPE) assembly including the damping device.

### BACKGROUND

Outdoor equipment, such as the 5G Customer Premise Equipment (CPE), needs to be fixed on an outdoor installation foundation (e.g., a wall or a utility pole). At present, fixing devices for fixing outdoor equipment mainly include holding poles, expansion screws, sticking back adhesive, and the like. Once the fixing device fails, the outdoor equipment will fall from the installation foundation, leading to a risk of injuring people.

CN208906965U provides a tension guide wheel assembly for used in a unwinding stage of a stranding machine, which includes a damping spool unwinding seat, with a spool thereon for releasing to-be-used steel wire.

### SUMMARY

The present disclosure relates to a damping device and a CPE assembly including the damping device.

The features of the damping device and the CPE assembly according to embodiments of the present disclosure are set out in the appended set of claims.

### BRIEF DESCRIPTION OF DRAWINGS

FIG. 1 is a schematic three-dimensional structural diagram of an implementation of a damping device according to the present disclosure;
FIG. 2 is a schematic diagram of an implementation of the damping device with a top plate of a housing removed;
FIG. 3 is a schematic diagram of a friction cylinder in the damping device in a non-offset state;
FIG. 4 is a schematic diagram of the friction cylinder in the damping device in an offset state;
FIG. 5 is a schematic diagram of the damping device viewed from the side of the top plate; and
FIG. 6 is a schematic diagram of the damping device viewed from the side of a bottom plate.

### DETAILED DESCRIPTION

In order to make those having ordinary skills in the art to better understand the technical schemes of the present disclosure, a damping device and a CPE assembly including the damping device according to the present disclosure will be described in detail below in conjunction with the accompanying drawings.

Embodiments of the present disclosure will be more fully described hereinafter with reference to the accompanying drawings, but the embodiments may be embodied in different forms, and should not be construed as being limited to the embodiments set forth herein. On the contrary, these embodiments are provided to make the present disclosure thorough and complete, and enable those having ordinary skills in the art to fully understand the scope of the present disclosure.

The various embodiments in the present disclosure and the various features in the embodiments can be combined to derive other embodiments not explicitly described.

As used herein, the term "and/or" includes any and all combinations of one or more related enumerated items.

The terms used herein are only used to describe specific embodiments, and are not intended to limit the present disclosure. As used herein, singular forms "a" and "the" are also intended to include plural forms, unless otherwise indicated clearly in the context. It should be also understood that when used in the present description, the terms "include" and "made of" specify the presence of said features, integers, steps, operations, elements and/or components, but do not exclude the presence or addition of one or more other features, integers, steps, operations, elements, components and/or groups thereof.

Unless otherwise defined, all the terms (including technical and scientific terms) used herein have the same meanings as commonly understood by those having ordinary skills in the art. It will also be understood that terms such as those defined in commonly used dictionaries should be interpreted as having meanings consistent with their meanings in the backgrounds of the related art and the present disclosure, and will not be interpreted as having idealized or over-formal meanings, unless so defined explicitly herein.

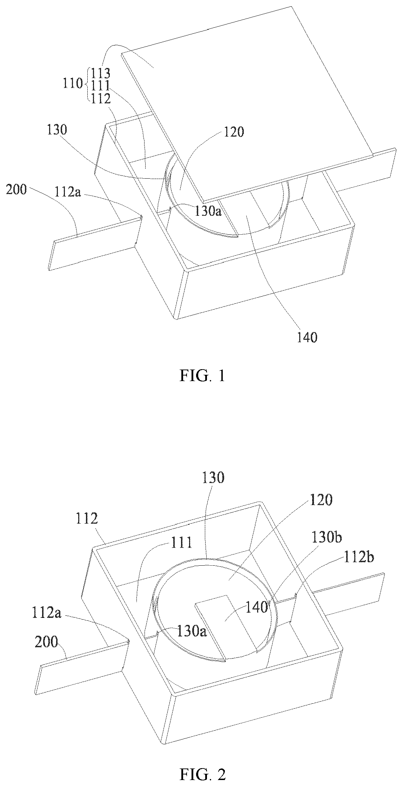

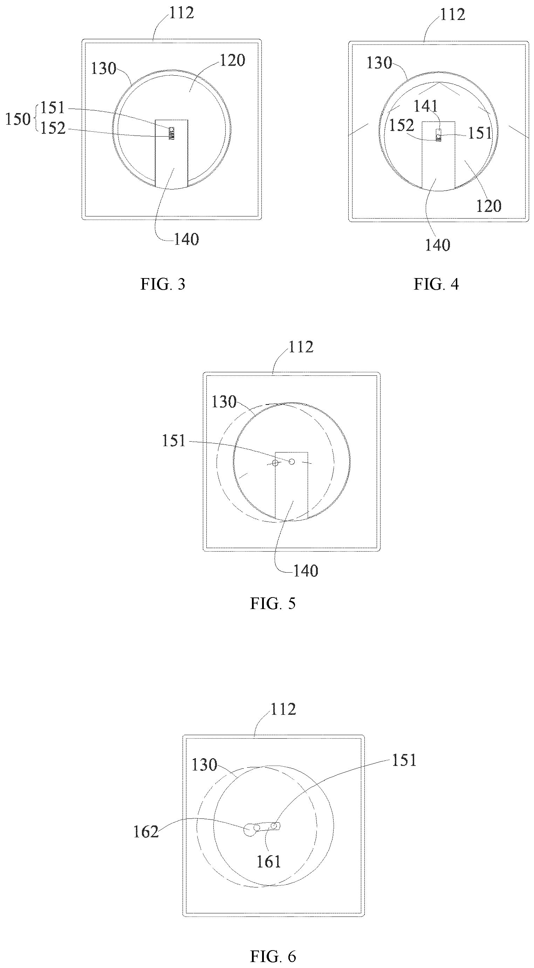

According to an aspect of the present disclosure, a damping device is provided. As shown in FIGS. 1 and 2, the damping device includes a housing 110, a guide roller 120, a friction cylinder 130, and a buffer shaft (see reference numeral 150 in FIG. 3). As shown in FIGS. 3 and 4, the buffer shaft 150 includes a shaft body 151 and a buffer 152.

A mounting portion of the buffer 152 is fixedly arranged in the housing 110 relative to the friction cylinder 130, and one end of the shaft body 151 is connected with the buffer 152.

The other end of the shaft body 151 is arranged on a bottom plate of the housing 110, and the guide roller 120 is rotatably arranged on the shaft body 151.

The friction cylinder 130 is sleeved on the guide roller 120 and separated from the housing 110. The guide roller 120 has an outer diameter less than an inner size of the friction cylinder 130, so that there exists a gap between an inner surface of the friction cylinder 130 and an outer surface of the guide roller 120.

The housing 110 is provided with a first wire inlet hole 112a and a first wire outlet hole 112b in a sidewall 112. The friction cylinder 130 is provided with a second wire inlet hole 130a and a second wire outlet hole 130b. When the first wire inlet hole 112a is aligned with the second wire inlet hole 130a, the first wire outlet hole 112b can be aligned with the second wire outlet hole 130b.

The damping device according to the present disclosure is used cooperatively with outdoor equipment (e.g., CPE), with the outdoor equipment arranged outdoors and the damping device according to the present disclosure arranged indoors. During mounting, one end of a wire 200 of the outdoor equipment is passed through the first wire inlet hole 112a of the housing 110 to enter the housing 110, and then passed through the second wire inlet hole 130a of the friction cylinder 130 to enter the gap between the friction cylinder 130 and the guide roller 120. The wire goes around the guide roller 120 in the gap between the friction cylinder 130 and the guide roller 120 and is passed through the second wire outlet hole 130b in the friction cylinder 130. Finally, the wire is passed through the first wire outlet hole 112b in the sidewall 112 of the housing 110 to get out of the damping device, and is connected to indoor electronic equipment, so that the friction cylinder 130 is suspended in the housing 110 by the wire 200 under an initial state.

When the outdoor equipment is fixed on a corresponding installation foundation, as shown in FIG. 3, in the damping device, the friction cylinder 130 is suspended in the housing 110 of the damping device under the action of the wire 200, and the guide roller 120 is not in contact with the friction cylinder 130. When the wire 200 is pulled at a low speed, the guide roller 120 can rotate around the shaft body, to complete the assembly of the damping device with the wire of outdoor equipment.

In the damping device, the guide roller 120 is arranged in the housing by means of the buffer shaft. When the buffer 152 is subjected to an external force, the buffer 152 is elastically deformed, and thus can move within a certain range. Therefore, when the wire 200 is subjected to an external force, the force is transferred to the friction cylinder 130, and the mounting portion of the buffer 152 can move within a certain range under the drive of the friction cylinder 130. Since there exists the gap between the guide roller 120 and the friction cylinder 130, when the friction cylinder 130 moves to a position where the inner surface of the friction cylinder 130 is in contact with the outer surface of the guide roller 120, if the wire continues to move and drive the guide roller 120 to rotate, a friction force will be generated between the guide roller 120 and the friction cylinder 130 to prevent further rotation of the guide roller 120.

If the fixing device of the outdoor equipment fails and the outdoor equipment comes off from the installation foundation and drops down, the wire will be driven to move down. As shown in FIG. 4, under the downward force brought by the outdoor equipment, the wire tends to change from a curved state into a straight state, to lift the friction cylinder 130, and the friction cylinder 130 drives the buffer 152 to move up, resulting that the guide roller 120 generates an acting force on the buffer 152 to compress the buffer 152. Consequently, the buffer 152 is elastically deformed to an extent that the friction cylinder 130 comes into contact with the guide roller 120. After the guide roller 120 comes into contact with the friction cylinder 130, the guide roller 120 is stuck under the action of the friction force and cannot further rotate around the shaft body 151. During the dropping of the outdoor equipment, the wire is always closely bonded to the guide roller 120, so there also exists a friction force between the surface of the wire and the surface of the guide roller 120. When the guide roller 120 is stuck to stop rotating, the wire cannot quickly slide over the guide roller 120 as well, resulting in that the moving speed of the wire is decreased or even the wire stops moving. After the moving speed of the wire is decreased, the dropping speed of the outdoor equipment connected with the wire is decreased as well. After the wire stops moving, the outdoor equipment stops dropping as well. Thus, the risk of the outdoor equipment coming off from the installation foundation to injure people can be decreased.

It should also be noted that since the buffer 152 can be elastically deformed under the effect of an external force, when the outdoor equipment drops, due to a buffering effect of the buffer 152, the wire moves for a short period of time rather than stops immediately. Therefore, the damping device according to the present disclosure can also prevent the wire from being broken due to a sudden stop, thereby preventing the outdoor equipment from stopping operation due to dropping and preventing the dropping of the outdoor equipment from affecting the use of the outdoor equipment by users. For example, when the outdoor equipment is CPE, the provision of the damping device on the wire of the CPE can prevent communication interruption.

When the buffer 152 is in a deformed state, there exists elastic potential energy, which generates a restoring force after being released. After the force applied on the wire by the outdoor equipment due to dropping is released (for example, after the outdoor equipment is fixedly remounted), the elastic potential energy is released. Under the effect of the restoring force of the buffer 152, the friction cylinder 130 can return to an initial position (i.e., a position where the friction cylinder 130 is located when the buffer 152 is in an initial state). When the wire is gently pulled, the guide roller 120 will rotate and allow the wire to pass through the damping device, and the remounting of the outdoor equipment and corresponding components can be completed.

In the present disclosure, the specific structure of the buffer 152 is not particularly limited. For example, the buffer 152 may be a spring, an elastic sheet or other elastic structures. The buffer 152 may also be an electromagnet. When the guide roller 120 drops into contact with the friction cylinder, the electromagnet can be energized and attracts a magnetically conductive part arranged on the guide roller 120 or the friction cylinder 130, such that the guide roller 120 comes into contact with the friction cylinder 130 and generates a friction force.

In the present disclosure, there is no particular requirement for the surface state of the friction cylinder 130, as long as the friction force generated when the inner surface of the friction cylinder 130 is in contact with the outer surface of the guide roller 120 can prevent the guide roller 120 from continuing to rotate.

In the present disclosure, there is no particular limitation on the materials of the friction cylinder 130 and the guide roller 120. For example, the friction cylinder 130 and the guide roller 120 may be made of plastic, respectively.

In the present disclosure, the specific structure of the housing 110 is not particularly limited as well. For example, as shown in FIGS. 1 and 2, the housing 110 may include a bottom plate 111, a sidewall 112 arranged around the bottom plate 111, and a top plate 113 arranged opposite to the bottom plate 111. It should be noted that although the housing 110 shown in FIGS. 1 and 2 is of a rectangular octahedral structure, the present disclosure is not limited thereto, and the housing 110 may also be of other structures such as a cylindrical structure or a prismatic structure.

In the present disclosure, there is no particular limitation on how to fix the friction cylinder 130 relative to the mounting portion of the buffer 152. For example, the buffer 152 may be directly arranged on the wall of the friction cylinder by utilizing an adhesive, or a fastener.

In the present disclosure, in order to facilitate arrangement, the damping device may further include a mounting plate 140. The mounting plate 140 is fixedly arranged at one end of the friction cylinder 130 facing away from the bottom plate 111 and is arranged opposite to the bottom plate 111. The mounting plate 140 extends toward the interior of the friction cylinder 130 such that at least a part of an orthographic projection of the mounting plate 140 on the bottom plate 111 falls within an area defined by an orthographic projection of the friction cylinder 130 on the bottom plate 111. The mounting portion of the buffer 152 is fixedly arranged on a part of the mounting plate 140 corresponding to an internal space of the friction cylinder 130.

By provision of the mounting plate 140, the shaft body 151 can be located inside the friction cylinder 130, and the guide roller 120 can be conveniently mounted, to allow a gap to exist between the outer surface of the guide roller 120 and the inner surface of the friction cylinder 130.

As an implementation, if there is no external force after the damping device is assembled, the outer surface of the guide roller 120 is evenly spaced from the inner surface of the friction cylinder 130. Accordingly, after the damping device is assembled and the wire 200 is passed through the damping device, since the friction cylinder 130 is a cylinder, the axis of the shaft body 151 coincides with the axis of the friction cylinder 130 in case of no external force. When the friction cylinder 130 is a cylinder, the outer diameter of the guide roller 120 is less than an inner diameter of the friction cylinder 130.

In order to limit the moving range of the friction cylinder 130, as an implementation, as shown in FIG. 4, the mounting plate 140 is provided with a mounting hole 141. The buffer 152 is arranged in the mounting hole 141, and one end of the shaft body 151 is inserted into the mounting hole 141.

Because the mounting hole 141 has a limited size, the one end of the shaft body 151 can only move in a space defined by the mounting hole 141, thus ensuring that the friction cylinder 130 can inevitably move to a position where the friction cylinder 130 is in contact with the guide roller 120. Moreover, once the friction cylinder 130 moves to the position where it is in contact with the guide roller 120, the friction cylinder 130 will not make a large movement, ensuring that the friction force between the guide roller 120 and the friction cylinder 130 can lock the guide roller.

In the present disclosure, the mounting hole 141 may or may not run through the mounting plate 140 in a thickness direction, as long as one opening of the mounting hole faces the bottom plate of the housing.

As an implementation, the mounting hole is rectangular, and when the damping device and the outdoor equipment are mounted in place, a length direction of the mounting hole is a vertical direction. Thus, the end of the shaft body 151 facing away from the bottom plate of the housing can reciprocate in the vertical direction under the restriction of the mounting hole 141.

As described above, the housing 110 includes the bottom plate 111, and one end of the shaft body 151 faces the bottom plate 111. In the present disclosure, there is no particular limitation on how the shaft body 151 is mounted on the bottom plate 111 of the housing 110. For example, the shaft body 151 may be adhered to the bottom plate 111 by an adhesive, or the bottom plate 111 may be provided with a mounting hole into which the shaft body 151 is inserted.

In the embodiment shown in FIG. 6, the bottom plate 111 is provided with an arc-shaped guide slot 161, and the other end of the shaft body 151 is inserted into the arc-shaped guide slot 161. Thus, after the buffer 152 is compressed and brings the guide roller 120 into contact with the friction cylinder 130, under the further action of the wire, one end of the shaft body 151 can still swing under the guidance of the guide slot 161, increasing the duration of an impact from the wire on the damping device, and thus the impact of the damping device can be reduced (correspondingly, a counter-acting force applied on the wire by the damping device can be reduced). That is, the guide roller 120 will not stop rotating suddenly, preventing the wire from being broken due to a sudden stop of the guide roller 120. As an implementation, when the force received by the buffer 152 is greater than twice an initial elastic force of the buffer 152, the shaft body 151 swings under the guidance of the guide slot 161.

FIG. 5 is a schematic diagram of the damping device viewed from the side of the top plate. The circular dotted line in FIG. 5 shows an outline of an end face of the friction cylinder 130 facing the bottom plate of the housing, and the arc-shaped dotted line in FIG. 5 shows a moving trajectory of one end of the shaft body 151 located in the guide slot 161.

FIG. 6 is a schematic diagram of the damping device viewed from the side of the bottom plate. The circular dotted line in FIG. 6 shows an outline of an end face of the friction cylinder 130 facing away from the bottom plate of the housing. Moreover, FIG. 6 also shows that the shaft body 151 can slide under the guidance of the guide slot 161.

In order to facilitate the restoration of the friction cylinder 130, as an implementation, the housing is further provided with an auxiliary restoring mechanism on the bottom plate. The auxiliary restoring mechanism is arranged at one end of the guide slot and can provide the shaft body with a thrust for moving away from the auxiliary restoring mechanism when the shaft body is in contact with the auxiliary restoring mechanism.

In the present disclosure, the specific structure of the auxiliary restoring mechanism is not particularly limited. For example, the auxiliary restoring mechanism may be a spring or an elastic sheet arranged at a tail end of the guide slot. When the shaft body moves to the tail end of the guide slot, the shaft body compresses the auxiliary restoring mechanism, and a restoring force generated by the auxiliary restoring mechanism helps the shaft body drive the friction cylinder to return to the initial position.

As an implementation, as shown in FIG. 6, the housing is further provided with an accommodating cavity 162 communicating with the arc-shaped guide slot 161 on the bottom plate. One end of the shaft body 151 facing the bottom plate of the housing is inserted into the guide slot 161 to come into sealed contact with a sidewall of the guide slot 161. The damping device may further include a retractable cover, which is arranged on the bottom plate of the housing and covers the accommodating cavity. The retractable cover is in sealed contact with the shaft body and can extend and retract with the movement of the shaft body, such that a sealed chamber is defined by the accommodating cavity, the guide slot, the retractable cover and the shaft body.

When the damping device in use, hydraulic oil may be arranged in the accommodating cavity. Since the guide slot communicates with the accommodating cavity, when the shaft body is at the initial position, the hydraulic oil is distributed in the guide slot and the accommodating cavity. After the shaft body swings to completely press the hydraulic oil into the accommodating cavity, the hydraulic oil will generate a pressure to push the shaft body, helping restoring the shaft body.

In the present disclosure, the hydraulic oil may not be injected into the accommodating cavity 162 of the damping device first. Only when the damping device needs to be assembled with the outdoor equipment, is the hydraulic oil injected into the accommodating cavity 162.

In order to facilitate operation, the hydraulic oil may be arranged in advance into the sealed chamber formed by the accommodating cavity 162, the guide slot 161 and the retractable cover.

Of course, gas pressure generated by compressed gas can also be used to help restore the shaft body instead of arranging the hydraulic oil in the accommodating cavity.

As described above, the wire 200 goes around the guide roller 120 in the gap between the guide roller 120 and the friction cylinder 130. In order to facilitate the wire 200 to drive the guide roller 120 to rotate and to realize self-locking after the guide roller 120 comes into contact with the friction cylinder 130, the wire 200 may go around the guide roller 120 by half a circle.

The friction cylinder 130 and the housing 110 are arranged such that when the wire 200 is passed through the first wire inlet hole, the second wire inlet hole, the second wire outlet hole and the first wire outlet hole in sequence and the buffer 152 is in the initial state, the first wire inlet hole, the second wire inlet hole, the second wire outlet hole and the first wire outlet hole are arranged on the same straight line, so that the wire goes around the guide roller by at least half a circle. That is, when the friction cylinder 130 is in the initial state, the first wire inlet hole 112a, the second wire inlet hole 130a, the second wire outlet hole 130b and the first wire outlet hole 112b are sequentially arranged on the same straight line, so that the wire goes around the guide roller by at least half a circle.

As an implementation of the present disclosure, as shown in FIG. 2, the friction cylinder 130 and the housing 110 are arranged such that when the wire 200 is passed through the first wire inlet hole, the second wire inlet hole, the second wire outlet hole and the first wire outlet hole in sequence and the buffer 152 is in the initial state, the first wire inlet hole 112a, the second wire inlet hole 130a, the second wire outlet hole 130b and the first wire outlet hole 112b are sequentially arranged on a straight line where the diameter of the guide roller 120 is located, so that the wire 200 can go around the guide roller 120 by half a circle. That is, when the friction cylinder 130 is in the initial state, the first wire inlet hole 112a, the second wire inlet hole 130a, the second wire outlet hole 130b and the first wire outlet hole 112b are sequentially arranged on the straight line where the diameter of the guide roller 120 is located, so that the wire 200 can go around the guide roller 120 by half a circle.

In another aspect of the present disclosure, a CPE assembly is provided, which includes a CPE. The CPE assembly further includes the damping device described above according to the embodiments of the present disclosure. A wire of the CPE is passed through the first wire inlet hole and the second wire inlet hole respectively to enter the gap between the friction cylinder and the guide roller, and the wire goes around the guide roller and is passed through the second wire outlet hole and the first wire outlet hole to get out of the damping device.

During use, the CPE is arranged outdoors, and the damping device according to the present disclosure is arranged indoors. During mounting, one end of the wire 200 of the CPE is passed through the first wire inlet hole 112a of the housing 110 to enter the housing 110, and the end of the wire 200 is then passed through the second wire inlet hole 130a of the friction cylinder 130 to enter the gap between the friction cylinder 130 and the guide roller 120. The wire goes around the guide roller 120 in the gap between the friction cylinder 130 and the guide roller 120 and is passed through the second wire outlet hole 130b in the friction cylinder 130. Finally, the wire is passed through the first wire outlet hole 112b in the sidewall 112 of the housing 110 to get out of the damping device, and is connected to indoor electronic equipment. Thus, the friction cylinder 130 is suspended in the housing 110 by the wire 200 in an initial state.

When the CPE is fixed on a corresponding installation foundation, as shown in FIG. 3, in the damping device, the friction cylinder 130 is suspended in the housing 110 of the damping device under the action of the wire 200, and the guide roller 120 is not in contact with the friction cylinder 130. When the wire 200 is pulled at a low speed, the guide roller 120 can rotate around the shaft body, to complete the assembly of the damping device with the wire of outdoor equipment.

In the damping device, the guide roller 120 is arranged in the housing by means of the buffer shaft. When the buffer 152 is subjected to an external force, the buffer 152 is elastically deformed, and thus can move within a certain range. Therefore, when the wire 200 is subjected to an external force, the force is transferred to the shaft body 151, and the buffer 152 can move within a certain range under the drive of the shaft body 151, so that the friction cylinder 130 can also move within a certain range. Since there exists the gap between the guide roller 120 and the friction cylinder 130, when the friction cylinder 130 moves to a position where the inner surface of the friction cylinder 130 is in contact with the outer surface of the guide roller 120, if the wire continues to move and drive the guide roller 120 to rotate, a friction force will be generated between the guide roller 120 and the friction cylinder 130 to prevent further rotation of the guide roller 120.

If the fixing device of the CPE fails and the CPE comes off from the installation foundation and drops down, the wire will be driven to move down. As shown in FIG. 4, the wire is subjected to a downward force brought by the outdoor equipment, and the guide roller 120 drives the shaft body 151 to press the buffer 152, so that the buffer 152 is elastically deformed to an extent that the friction cylinder 130 comes into contact with the guide roller 120. After the guide roller 120 comes into contact with the friction cylinder 130, the guide roller 120 is stuck under the effect of the friction force and cannot further rotate around the shaft body 151. During the dropping of the CPE, the wire is always tightly closely bonded to the guide roller 120, so there also exists a friction force between the surface of the wire and the surface of the guide roller 120. When the guide roller 120 is stuck to stop rotating, the wire cannot quickly slide over the guide roller 120 as well, resulting in that the moving speed of the wire is decreased or even the wire stops moving. After the moving speed of the wire is decreased, the dropping speed of the CPE connected with the wire is decreased as well. After the wire stops moving, the CPE stops dropping as well. Thus, the risk of the CPE coming off from the installation foundation to injure people can be decreased.

It should also be noted that since the buffer 152 can be elastically deformed under the effect of an external force, when the CPE drops, due to a buffering effect of the buffer 152, the wire moves for a short period of time rather than stops moving immediately. Therefore, the damping device according to the present disclosure can also prevent the wire from being broken due to a sudden stop, thereby preventing the CPE from stopping operation due to dropping and preventing communication interruption.

When the buffer 152 is in a deformed state, a restoring force can be generated. After the force applied on the wire by the CPE due to dropping is released (for example, after the CPE is fixedly remounted), the elastic potential energy is released. Under the effect of the restoring force of the buffer 152, the friction cylinder 130 can return to an initial position. When the wire is gently pulled, the guide roller 120 will rotate and allow the wire to pass through the damping device, and the remounting of the CPE and corresponding components can be completed.

For the CPE, the wire 200 is a data cable.

The exemplary embodiments have been disclosed herein, and although specific terms are used, these terms are only intended to be and should only be interpreted in a general illustrative sense, and are not used for the purpose of limitation. In some examples, it is apparent to those having ordinary skills in the art that the features, characteristics and/or elements described in conjunction with the specific embodiments may be used alone or in combination with those described in conjunction with other embodiments, unless otherwise stated explicitly. Therefore, it will be understood by those having ordinary skills in the art that various modifications in form and details can be made without departing from the scope of the present disclosure set forth by the appended claims.

## Claims

1. A damping device, **characterized in that** it comprises: a housing (110), a guide roller (120), a friction cylinder (130), and a buffer shaft (150), the buffer shaft (150) comprising a shaft body (151) and a buffer (152), wherein:
a mounting portion of the buffer (152) is fixedly arranged in the housing (110) relative to the friction cylinder (130), and one end of the shaft body (151) is connected with the buffer (152);
the other end of the shaft body (151) is arranged on a bottom plate (111) of the housing (110), and the guide roller (120) is rotatably arranged on the shaft body (151);
the friction cylinder (130) is sleeved on the guide roller (120) and separated from the housing (110), and the guide roller (120) has an outer diameter less than an inner size of the friction cylinder (130), so that there exists a gap between an inner diameter of the friction cylinder (130) and an outer diameter of the guide roller (120); and
the housing (110) is provided with a first wire inlet hole (112a) and a first wire outlet hole (112b) in a sidewall (112), the friction cylinder (130) is provided with a second wire inlet hole (130a) and a second wire outlet hole (130b), and the first wire outlet hole (112b) is arranged to be aligned with the second wire outlet hole (130b) when the first wire inlet hole (112a) is aligned with the second wire inlet hole (130a).

2. The damping device of claim 1, further comprising: a mounting plate (140), wherein the mounting plate (140) is fixedly arranged at one end of the friction cylinder (130) facing away from the bottom plate (111) and is arranged opposite to the bottom plate (111), at least a part of an orthographic projection of the mounting plate (140) on the bottom plate (111) falls within an area defined by an orthographic projection of the friction cylinder (130) on the bottom plate (111), and the mounting portion of the buffer (152) is fixedly arranged on a part of the mounting plate (140) corresponding to an internal space of the friction cylinder (130).

3. The damping device of claim 2, wherein the mounting plate (140) is provided with a mounting hole (141), the buffer (152) is arranged in the mounting hole (141), and one end of the shaft body (151) facing away from the bottom plate (111) of the housing (110) is inserted into the mounting hole (141).

4. The damping device of any of claims 1 to 3, wherein the bottom plate (111) of the housing (110) is provided with a guide slot (161), one end of the shaft body (151) facing the bottom plate (111) of the housing (110) is inserted into the guide slot (161), and the guide slot (161) is arc-shaped.

5. The damping device of claim 4, wherein the housing (110) is further provided with an auxiliary restoring mechanism on the bottom plate (111), and the auxiliary restoring mechanism is arranged at one end of the guide slot (161) and is configured to provide the shaft body (151) with a thrust for moving away from the auxiliary restoring mechanism in response to the shaft body (151) being in contact with the auxiliary restoring mechanism.

6. The damping device of claim 5, wherein the auxiliary restoring mechanism comprises a retractable cover and an accommodating cavity (162) communicating with the guide slot (161), one end of the shaft body (151) facing the bottom plate (111) of the housing (110) is inserted into the guide slot (161) to be in a sealed contact with a sidewall of the guide slot (161), the retractable cover is arranged on the bottom plate (111) of the housing (110) and covers the accommodating cavity (162), the retractable cover is in sealed contact with the shaft body (151) and is capable of extending and retracting with movement of the shaft body (151), such that a sealed chamber is defined by the accommodating cavity (162), the guide slot (161), the retractable cover and the shaft body (151).

7. The damping device of claim 6, wherein hydraulic oil is provided in the sealed chamber defined by the accommodating cavity (162), the guide slot (161), the retractable cover and the shaft body (151).

8. The damping device of any of claims 1 to 3, wherein the friction cylinder (130) and the housing (110) are arranged such that when a wire (200) is passed through the first wire inlet hole (112a), the second wire inlet hole (130a), the second wire outlet hole (130b) and the first wire outlet hole (112b) in sequence and the buffer (152) is in an initial state, the first wire inlet hole (112a), the second wire inlet hole (130a), the second wire outlet hole (130b) and the first wire outlet hole (112b) are arranged on a same straight line, so that the wire (200) goes around the guide roller (120) by at least half a circle.

9. The damping device of claim 8, wherein the friction cylinder (130) and the housing (110) are arranged such that when a wire (200) is passed through the first wire inlet hole (112a), the second wire inlet hole (130a), the second wire outlet hole (130b) and the first wire outlet hole (112b) in sequence and the buffer (152) is in the initial state, the first wire inlet hole (112a), the second wire inlet hole (130a), the second wire outlet hole (130b) and the first wire outlet hole (112b) are arranged along a straight line where a diameter of the guide roller (120) is located.

10. A Customer Premise Equipment, CPE, assembly, comprising a CPE, wherein the CPE assembly further comprises the damping device of any of claims 1 to 9, a wire (200) of the CPE is passed through the first wire inlet hole (112a) and the second wire inlet hole (130a) respectively to enter a gap between the friction cylinder (130) and the guide roller (120), and the wire (200) goes around the guide roller (120) and is passed through the second wire outlet hole (130b) and the first wire outlet hole (112b) to get out of the damping device.

## Patentansprüche

1. Dämpfungsvorrichtung, **dadurch gekennzeichnet, dass** sie Folgendes umfasst: ein Gehäuse (110), eine Führungsrolle (120), einen Reibzylinder (130) und eine Pufferwelle (150), wobei die Pufferwelle (150) einen Wellenkörper (151) und einen Puffer (152) umfasst, wobei:
ein Befestigungsabschnitt des Puffers (152) relativ zu dem Reibzylinder (130) fest in dem Gehäuse (110) angeordnet ist und ein Ende des Wellenkörpers (151) mit dem Puffer (152) verbunden ist;
das andere Ende des Wellenkörpers (151) auf einer Bodenplatte (111) des Gehäuses (110) angeordnet ist und die Führungsrolle (120) drehbar an dem Wellenkörper (151) angeordnet ist;
der Reibzylinder (130) auf der Führungsrolle (120) ummantelt und von dem Gehäuse (110) getrennt ist und die Führungsrolle (120) einen Außendurchmesser aufweist, der kleiner als eine Innengröße des Reibzylinders (130) ist, sodass ein Spalt zwischen einem Innendurchmesser des Reibzylinders (130) und einem Außendurchmesser der Führungsrolle (120) vorhanden ist; und
das Gehäuse (110) mit einem ersten Drahteinlassloch (112a) und einem ersten Drahtauslassloch (112b) in einer Seitenwand (112) versehen ist, der Reibzylinder (130) mit einem zweiten Drahteinlassloch (130a) und einem zweiten Drahtauslassloch (130b) versehen ist und das erste Drahtauslassloch (112b) so angeordnet ist, dass es mit dem zweiten Drahtauslassloch (130b) ausgerichtet ist, wenn das erste Drahteinlassloch (112a) mit dem zweiten Drahteinlassloch (130a) ausgerichtet ist.

2. Dämpfungsvorrichtung nach Anspruch 1, ferner umfassend: eine Montageplatte (140), wobei die Montageplatte (140) fest an einem Ende des Reibzylinders (130) angeordnet ist, das von der Bodenplatte (111) abgewandt ist, und gegenüber der Bodenplatte (111) angeordnet ist, zumindest ein Teil einer orthogonalen Projektion der Montageplatte (140) auf der Bodenplatte (111) in einen Bereich fällt, der durch eine orthogonale Projektion des Reibzylinders (130) auf der Bodenplatte (111) definiert ist, und der Befestigungsabschnitt des Puffers (152) fest an einem Teil der Montageplatte (140) angeordnet ist, der einem Innenraum des Reibzylinders (130) entspricht.

3. Dämpfungsvorrichtung nach Anspruch 2, wobei die Befestigungsplatte (140) mit einer Befestigungsbohrung (141) versehen ist, der Puffer (152) in der Befestigungsbohrung (141) angeordnet ist und ein von der Bodenplatte (111) des Gehäuses (110) abgewandtes Ende des Wellenkörpers (151) in die Befestigungsbohrung (141) eingesetzt ist.

4. Dämpfungsvorrichtung nach einem der Ansprüche 1 bis 3, wobei die Bodenplatte (111) des Gehäuses (110) mit einem Führungsschlitz (161) versehen ist, ein der Bodenplatte (111) des Gehäuses (110) zugewandtes Ende des Wellenkörpers (151) in den Führungsschlitz (161) eingesetzt ist und der Führungsschlitz (161) bogenförmig ist.

5. Dämpfungsvorrichtung nach Anspruch 4, wobei das Gehäuse (110) ferner mit einem Hilfsrückstellmechanismus auf der Bodenplatte (111) versehen ist und der Hilfsrückstellmechanismus an einem Ende des Führungsschlitzes (161) angeordnet ist und so konfiguriert ist, dass er den Wellenkörper (151) mit einem Schub zum Bewegen weg von dem Hilfsrückstellmechanismus als Reaktion darauf versieht, dass der Wellenkörper (151) in Kontakt mit dem Hilfsrückstellmechanismus ist.

6. Dämpfungsvorrichtung nach Anspruch 5, wobei der Hilfsrückstellmechanismus eine einziehbare Abdeckung und einen Aufnahmehohlraum (162) umfasst, der mit dem Führungsschlitz (161) in Verbindung steht, ein der Bodenplatte (111) des Gehäuses (110) zugewandtes Ende des Wellenkörpers (151) in den Führungsschlitz (161) so eingesetzt ist, dass es in einem abgedichteten Kontakt mit einer Seitenwand des Führungsschlitzes (161) ist, die einziehbare Abdeckung an der Bodenplatte (111) des Gehäuses (110) angeordnet ist und den Aufnahmehohlraum (162) abdeckt, die einziehbare Abdeckung in abgedichtetem Kontakt mit dem Wellenkörper (151) ist und sich bei einer Bewegung des Wellenkörpers (151) ausdehnen und einziehen kann, sodass eine abgedichtete Kammer durch den Aufnahmehohlraum (162), den Führungsschlitz (161), die einziehbare Abdeckung und den Wellenkörper (151) definiert ist.

7. Dämpfungsvorrichtung nach Anspruch 6, wobei Hydrauliköl in der abgedichteten Kammer bereitgestellt ist, die durch den Aufnahmehohlraum (162), den Führungsschlitz (161), die einziehbare Abdeckung und den Wellenkörper (151) definiert ist.

8. Dämpfungsvorrichtung nach einem der Ansprüche 1 bis 3, wobei der Reibzylinder (130) und das Gehäuse (110) derart angeordnet sind, dass, wenn ein Draht (200) durch das erste Drahteinlassloch (112a), das zweite Drahteinlassloch (130a), das zweite Drahtauslassloch (130b) und das erste Drahtauslassloch (112b) in Folge geführt wird und sich der Puffer (152) in einem Ausgangszustand befindet, das erste Drahteinlassloch (112a), das zweite Drahteinlassloch (130a), das zweite Drahtauslassloch (130b) und das erste Drahtauslassloch (112b) auf einer gleichen geraden Linie angeordnet sind, sodass der Draht (200) um mindestens einen halben Kreis um die Führungsrolle (120) herumläuft.

9. Dämpfungsvorrichtung nach Anspruch 8, wobei der Reibzylinder (130) und das Gehäuse (110) derart angeordnet sind, dass, wenn ein Draht (200) durch das erste Drahteinlassloch (112a), das zweite Drahteinlassloch (130a), das zweite Drahtauslassloch (130b) und das erste Drahtauslassloch (112b) in Folge geführt wird und sich der Puffer (152) im Ausgangszustand befindet, das erste Drahteinlassloch (112a), das zweite Drahteinlassloch (130a), das zweite Drahtauslassloch (130b) und das erste Drahtauslassloch (112b) entlang einer geraden Linie angeordnet sind, in der sich ein Durchmesser der Führungsrolle (120) befindet.

10. Customer-Premise-Equipment- (CPE-) Anordnung, umfassend eine CPE, wobei die CPE-Anordnung ferner die Dämpfungsvorrichtung nach einem der Ansprüche 1 bis 9 umfasst, ein Draht (200) der CPE durch das erste Drahteinlassloch (112a) bzw. das zweite Drahteinlassloch (130a) geführt wird, um in einen Spalt zwischen dem Reibzylinder (130) und der Führungsrolle (120) einzutreten, und der Draht (200) um die Führungsrolle (120) herumläuft und durch das zweite Drahtauslassloch (130b) und das erste Drahtauslassloch (112b) geführt wird, um aus der Dämpfungsvorrichtung herauszukommen.

## Revendications

1. Dispositif d'amortissement, **caractérisé en ce qu'**il comprend : un boîtier (110), un rouleau de guidage (120), un cylindre de friction (130) et un arbre amortisseur (150), l'arbre amortisseur (150) comprenant un corps d'arbre (151) et un amortisseur (152), dans lequel :
une partie de montage de l'amortisseur (152) est agencée de manière fixe dans le boîtier (110) par rapport au cylindre de friction (130), et une extrémité du corps d'arbre (151) est reliée à l'amortisseur (152) ;
l'autre extrémité du corps d'arbre (151) est agencée sur une plaque inférieure (111) du boîtier (110), et le rouleau de guidage (120) est agencé de manière rotative sur le corps d'arbre (151) ;
le cylindre de friction (130) est emmanché sur le rouleau de guidage (120) et séparé du boîtier (110), et le rouleau de guidage (120) possède un diamètre extérieur inférieur à une taille intérieure du cylindre de friction (130), afin qu'il existe un jeu entre un diamètre intérieur du cylindre de friction (130) et un diamètre extérieur du rouleau de guidage (120) ; et
le boîtier (110) est doté d'un premier trou d'entrée de fil (112a) et d'un premier trou de sortie de fil (112b) dans une paroi latérale (112), le cylindre de friction (130) est doté d'un second trou d'entrée de fil (130a) et d'un second trou de sortie de fil (130b), et le premier trou de sortie de fil (112b) est agencé pour être aligné avec le second trou de sortie de fil (130b) lorsque le premier trou d'entrée de fil (112a) est aligné avec le second trou d'entrée de fil (130a).

2. Dispositif d'amortissement de la revendication 1, comprenant en outre : une plaque de montage (140), dans lequel la plaque de montage (140) est agencée de manière fixe à une extrémité du cylindre de friction (130) tournée à l'opposé de la plaque inférieure (111) et est agencée à l'opposé de la plaque inférieure (111), au moins une partie d'une projection orthographique de la plaque de montage (140) sur la plaque inférieure (111) tombe dans une zone définie par une projection orthographique du cylindre de friction (130) sur la plaque inférieure (111), et la partie de montage de l'amortisseur (152) est agencée de manière fixe sur une partie de la plaque de montage (140) correspondant à un espace interne du cylindre de friction (130).

3. Dispositif d'amortissement de la revendication 2, dans lequel la plaque de montage (140) est dotée d'un trou de montage (141), l'amortisseur (152) est agencé dans le trou de montage (141), et une extrémité du corps d'arbre (151) tournée à l'opposé de la plaque inférieure (111) du boîtier (110) est insérée dans le trou de montage (141).

4. Dispositif d'amortissement de l'une quelconque des revendications 1 à 3, dans lequel la plaque inférieure (111) du boîtier (110) est dotée d'une fente de guidage (161), une extrémité du corps d'arbre (151) tournée vers la plaque inférieure (111) du boîtier (110) est insérée dans la fente de guidage (161), et la fente de guidage (161) est en forme d'arc.

5. Dispositif d'amortissement de la revendication 4, dans lequel le boîtier (110) est en outre doté d'un mécanisme de restauration auxiliaire sur la plaque inférieure (111), et le mécanisme de restauration auxiliaire est agencé à une extrémité de la fente de guidage (161) et est conçu pour fournir au corps d'arbre (151) une poussée pour s'éloigner du mécanisme de restauration auxiliaire en réponse au contact du corps d'arbre (151) avec le mécanisme de restauration auxiliaire.

6. Dispositif d'amortissement de la revendication 5, dans lequel le mécanisme de restauration auxiliaire comprend un couvercle rétractable et une cavité de réception (162) communiquant avec la fente de guidage (161), une extrémité du corps d'arbre (151) tournée vers la plaque inférieure (111) du boîtier (110) est insérée dans la fente de guidage (161) pour être en contact étanche avec une paroi latérale de la fente de guidage (161), le couvercle rétractable est agencé sur la plaque inférieure (111) du boîtier (110) et recouvre la cavité de réception (162), le couvercle rétractable est en contact étanche avec le corps d'arbre (151) et est capable de s'étendre et de se rétracter avec un mouvement du corps d'arbre (151), de sorte qu'une chambre étanche soit définie par la cavité de réception (162), la fente de guidage (161), le couvercle rétractable et le corps d'arbre (151).

7. Dispositif d'amortissement de la revendication 6, dans lequel de l'huile hydraulique est fournie dans la chambre étanche définie par la cavité de réception (162), la fente de guidage (161), le couvercle rétractable et le corps d'arbre (151).

8. Dispositif d'amortissement de l'une quelconque des revendications 1 à 3, dans lequel le cylindre de friction (130) et le boîtier (110) sont agencés de sorte que lorsqu'un fil (200) est passé à travers le premier trou d'entrée de fil (112a), le second trou d'entrée de fil (130a), le second trou de sortie de fil (130b) et le premier trou de sortie de fil (112b) en séquence et que l'amortisseur (152) est dans un état initial, le premier trou d'entrée de fil (112a), le second trou d'entrée de fil (130a), le second trou de sortie de fil (130b) et le premier trou de sortie de fil (112b) sont agencés sur une même ligne droite, afin que le fil (200) contourne le rouleau de guidage (120) d'au moins un demi-cercle.

9. Dispositif d'amortissement de la revendication 8, dans lequel le cylindre de friction (130) et le boîtier (110) sont agencés de sorte que lorsqu'un fil (200) est passé à travers le premier trou d'entrée de fil (112a), le second trou d'entrée de fil (130a), le second trou de sortie de fil (130b) et le premier trou de sortie de fil (112b) en séquence et que l'amortisseur (152) est dans l'état initial, le premier trou d'entrée de fil (112a), le second trou d'entrée de fil (130a), le second trou de sortie de fil (130b) et le premier trou de sortie de fil (112b) sont agencés le long d'une ligne droite où un diamètre du rouleau de guidage (120) est situé.

10. Ensemble d'équipement des locaux d'abonné, CPE, comprenant un CPE, ledit ensemble CPE comprenant en outre le dispositif d'amortissement de l'une quelconque des revendications 1 à 9, un fil (200) du CPE étant passé à travers le premier trou d'entrée de fil (112a) et le second trou d'entrée de fil (130a) respectivement pour entrer dans un jeu entre le cylindre de friction (130) et le rouleau de guidage (120), et le fil (200) contournant le rouleau de guidage (120) et étant passé à travers le second trou de sortie de fil (130b) et le premier trou de sortie de fil (112b) pour sortir du dispositif d'amortissement.
